# EUROPÄISCHE PATENTSCHRIFT

(11) **EP 1 636 490 B1**
(45) Veröffentlichungstag und Bekanntmachung des Hinweises auf die Patenterteilung: **08.04.2009**
(21) Anmeldenummer: 04732943.8
(22) Anmeldetag: 14.05.2004
(51) Int. Cl.: F03D 1/06

(54) **ROTORBLATTANSCHLUSS**
ROTOR BLADE CONNECTION
RACCORD DE PALE DE ROTOR

(30) Priorität: 28.05.2003 DE 10324166
(43) Veröffentlichungstag der Anmeldung: 22.03.2006
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2004/005166
(87) Internationale Veröffentlichungsnummer: WO 2004/106732

(56) Entgegenhaltungen:
- WO-A-01/42647
- US-A- 4 755 106
- US-B1- 6 371 730
- HAU ERICH ED - HAU E: "WINDKRAFTANLAGEN" WINDKRAFTANLAGEN. GRUNDLAGEN, TECHNIK, EINSATZ, WIRTSCHAFTLICHKEIT, BERLIN : SPRINGER, DE, 1996, Seiten 186-213, XP002143305 ISBN: 3-540-57430-1 in der Anmeldung erwähnt

## Beschreibung

Die vorliegende Erfindung betrifft ein Rotorblatt für eine Windenergieanlage, mit mehreren im Bereich der Rotorblattwurzel angeordneten Löchern, die als Durchgangslöcher ausgebildet sind, die sich im Wesentlichen quer zur Längsachse des Rotorblattes erstrecken, mit in die Löcher eingesetzten Querbolzen und mit den Querbolzen verbindbaren Zugelementen.

Aus der DE 197 33 372 C1 ist ein Rotorblatt mit im Bereich der Rotorblattwurzel angeordneten Löchern bekannt, die sich im Wesentlichen quer zur Längsachse des Rotorblattes erstrecken, mit in die Löcher eingesetzten Querbolzen und mit den Querbolzen verbindbaren Zugelementen. Diese Löcher sind als Sacklöcher ausgebildet.

Aus dem Buch "Windkraftanlagen" von Erich Hau, 2. Auflage, Springer-Verlag, 1996, Seite 202, das als nächstkommender Stand der Technik betrachtet wird, ist ein Rotorblatt der eingangs genannten Art bekannt. Bei diesem bekannten Rotorblatt verläuft ein Zugelement (dort als Zuganker bezeichnet) von dem Querbolzen zu einem Flansch. Damit kann das Rotorblatt an dem Flansch, z. B. der Rotornabe, befestigt werden.

Der Stand der Technik offenbart innerhalb der Rotorblattwurzel verlaufende Zugelemente. Demnach müssen Kanäle im Material der Rotorblattwurzel vorhanden sein, in welche die Zugelemente eingesetzt sind. Entsprechend der damit einhergehenden Materialschwächung muss das Material im Bereich der Rotorblattwurzel durch geeignete konstruktive Maßnahmen verstärkt werden, damit die erforderliche Festigkeit gewährleistet ist.

Um diese Nachteile durch eine konstruktive Vereinfachun zu beseitigen, ist das erfindungsgemäße Rotorblatt dadurch gekennzeichnet, dass die Zugelemente außerhalb der Rotorblattwurzel verlaufen.

Dabei liegt der Erfindung die Erkenntnis zugrunde, dass damit zwar der Bereich der Rotorblattwurzel an der Nabe aerodynamisch nachteilig verändert wird, dies jedoch keinen nachteiligen Einfluss das akustische Verhalten und die übrigen Eigenschaften der Anlage hat, weil dieser Bereich des Rotorblattes entweder vom Spinner verdeckt ist oder sich wenigstens in dem am langsamsten drehenden Teil des Rotors befindet.

Mit dem erfindungsgemäßen Rotorblatt ist der Vorteil verbunden, dass einerseits das Material des Rotorblattes im Bereich der Rotorblattwurzel nicht durch Kanäle geschwächt ist und dass die Zugelemente jederzeit einer visuellen Prüfung unterworfen werden können, ohne dass dafür eine Demontage erforderlich ist. Daher kann z. B. beginnende Korrosion sofort erkannt und beseitigt werden.

Weiterhin ist auch ein Austausch eines Zugelementes auf einfache Weise möglich.

Insbesondere bei Verwendung von faserverstärktem Epoxidharz-Verbundmaterial als leichter und gleichzeitig robuster Werkstoff für Rotorblätter kann eine dauerhafte Verankerung der Querbolzen in der Rotorblattwurzel verwirklicht werden. Dabei ergibt sich eine günstige Krafteinleitung von einem Querbolzen in das Epoxidharz-Verbundmaterial des Rotorblattes.

Zweckmäßiger Weise sind mehrere beabstandete Löcher zur Aufnahme mehrerer Querbolzen in dem Rotorblatt vorgesehen, da sich dadurch die Festigkeit des Rotorblattanschlusses wesentlich erhöhen lässt, was insbesondere bei sehr großen Windenergieanlagen erforderlich ist. Die Löcher können so beabstandet sein, dass das Material nur unwesentlich durch die Löcher geschwächt wird.

Besonders bevorzugt ist eine Ausführungsform der Erfindung, bei der das Rotorblatt im Bereich der Rotorblattwurzel einen erweiterten Querschnitt aufweist und das Loch oder die Löcher im Bereich dieses erweiterten Querschnitts angeordnet ist/sind. Auch durch diese Maßnahme kann die Belastbarkeit der Verbindung zwischen Rotorblatt und Rotornabe wesentlich erhöht werden, da das Rotorblatt durch die Querschnittserweiterung im Bereich der Rotorblattwurzel wesentlich geringeren Spannungen ausgesetzt wird und somit mit größeren Kräften beaufschlagbar ist. Durch die erfindungsgemäße Anordnung der Löcher in dem Bereich des erweiterten Querschnitts ist eine günstige Krafteinleitung von dem Querbolzen auf das Material des Rotorblattes über eine entsprechend vergrößerte Fläche möglich, während eine wesentlich geringere Flächenpressung an der Grenzfläche zwischen Querbolzen und Innenfläche der Ausnehmung auftritt. Dabei kann die Querschnittserweiterung ein deutlich geringeres Ausmaß als bei einem bekannten Rotorblatt aufweisen, da die Bohrungen für innerhalb des Rotorblattes verlaufende Zugelemente nicht ausgeglichen werden müssen.

Gemäß einer besonders bevorzugten Ausführungsform der Erfindung erweitert sich der Querschnitt des Rotorblattes beidseitig in Richtung auf einen nabenseitigen Endabschnitt des Rotorblattes. Auf diese Weise wird eine symmetrische Krafteinleitung von den Querbolzen in das Rotorblatt realisiert.

Gemäß einer bevorzugten Weiterbildung dieses Ausführungsbeispiels weist das Rotorblatt zwei jeweils einstückig mit diesem ausgebildete, gegenüberliegende Verdickungsabschnitte auf, und die Löcher sind wenigstens teilweise im Bereich der Verdickungsabschnitte angeordnet. Die zur Querschnittserweiterung beitragenden Verdickungsabschnitte können durch anlaminieren von mehreren Schichten aus Faserverbundmaterial und Epoxidharz auf einfache und bekannte Weise angeformt werden.

Besonders bevorzugt ist ferner eine Ausführungsform, bei der das Rotorblatt im Bereich der Rotorblattwurzel einen im Wesentlichen rohrförmigen Endabschnitt aufweist, in welchem mehrere Löcher ausgebildet sind. Ein rohrförmiger Endabschnitt kann auf besonders gleichmäßige und einfache Weise an der Rotornabe befestigt werden und ist insbesondere bei sehr großen Windenergieanlagen, bei denen extreme Kräfte auftreten, und deren Rotorblätter von dem rohrförmigen Endabschnitt zur Befestigung in einen Flügelprofilabschnitt übergehen, vorteilhaft.

Eine große Leichtigkeit des Materials, verbunden mit einer großen Festigkeit ergibt sich bei einer Ausführungsform, bei der das Rotorblatt im Wesentlichen aus einem glasfaserverstärktem Epoxidharz-Verbundmaterial besteht.

Um einen besseren Lastabtrag zu erreichen, sind die Querbolzen bevorzugt in das Loch eingeklebt. Zusätzlich ergibt sich der Vorteil, dass die Querbolzen zuverlässig in der vorgegebenen Position gehalten werden können, auch während die Zugelemente eingebaut werden.

Insbesondere bevorzugt können konzentrisch um die Längsachse des Loches (bzw. des Querbolzens) an wenigstens einem bevorzugt aber beiden Enden des Loches metallische Scheiben vorsehen sein. Diese Scheiben, die in ihrer Form mit bekannten Unterlegscheiben vergleichbar sind, werden bündig mit der Oberfläche der Rotorblattwurzel im Bereich des Loches angebracht und verhindern eine Beschädigung des Lochrandes.

In einer weiterhin bevorzugten Ausführungsform ist in das Loch eine Hülse einsetzt bzw. eingeklebt. Diese Hülse ist aus einem metallischen Material und verhindert eine Reibung zwischen der Wandung des Loches und dem Querbolzen. Eventuell entstehende Reibung findet zwischen dem Querbolzen und der Hülse statt.

Die zuvor erläuterten Vorteile eines erfindungsgemäßen Rotorblattes ergeben sich auf ähnliche Weise bei einem Rotor für eine Windenergieanlage der eingangs genannten Art, der mit einem erfindungsgemäßen Rotorblatt ausgestattet ist. Zur Vermeidung von Wiederholungen wird deshalb hinsichtlich der vorteilhaften Wirkungen auf die vorstehenden Ausführungen Bezug genommen.

Eine bevorzugte Weiterbildung des erfindungsgemäßen Rotors zeichnet sich dadurch aus, dass die Rotornabe einen umlaufenden Flanschabschnitt mit im Wesentlichen T-förmigem Querschnitt zum Anschluss des Rotorblattes aufweist und das Rotorblatt mittels mehrerer Zugelemente, die mit an dem Rotorblatt angebrachten Querbolzen verbunden sind, mit dem Flanschabschnitt verschraubt ist. Durch den zweckmäßiger Weise symmetrischen T-förmigen Flanschabschnitt kann eine symmetrische Krafteinleitung von dem Rotorblatt in die Nabe realisiert werden, indem in den beiden im Wesentlichen in einer Ebene liegenden freien Abschnitten des T-förmigen Flanschabschnitts Durchgangsbohrungen ausgebildet sind, durch welche die Zugelemente hindurch greifen. Zweckmäßiger Weise sind die mehreren Zugelemente paarweise parallel zueinander und im Wesentlichen in zwei zueinander konzentrisch angeordneten Reihen angeordnet.

Die erfindungsgemäßen Vorteile werden auch bei einer Windenergieanlage verwirklicht, die mit einem Rotor und/oder einem Rotorblatt der vorstehend beschriebenen Art ausgestattet ist; hinsichtlich der hierdurch erreichbaren, erfindungsgemäßen Vorteile wird auf die vorstehenden Ausführungen im Zusammenhang mit einem erfindungsgemäßen Rotorblatt und Rotor verwiesen.

Die Erfindung wird nachstehend anhand eines Ausführungsbeispiels eines Rotors einer Windenergieanlage anhand der beigefügten Zeichnungen beschrieben. Dabei zeigen:
- Figur 1: eine vereinfachte Darstellung einer erfindungsgemäßen Windenergieanlage;
- Figur 2: eine Schnittdarstellung der erfindungsgemäßen Befestigung eines Rotorblattes an einer Rotornabe einer Windenergieanlage;
- Figur 3: eine Detailansicht aus Figur 2; und
- Figur 4: eine Schnittdarstellung einer alternativen Ausführungsform der Erfindung.

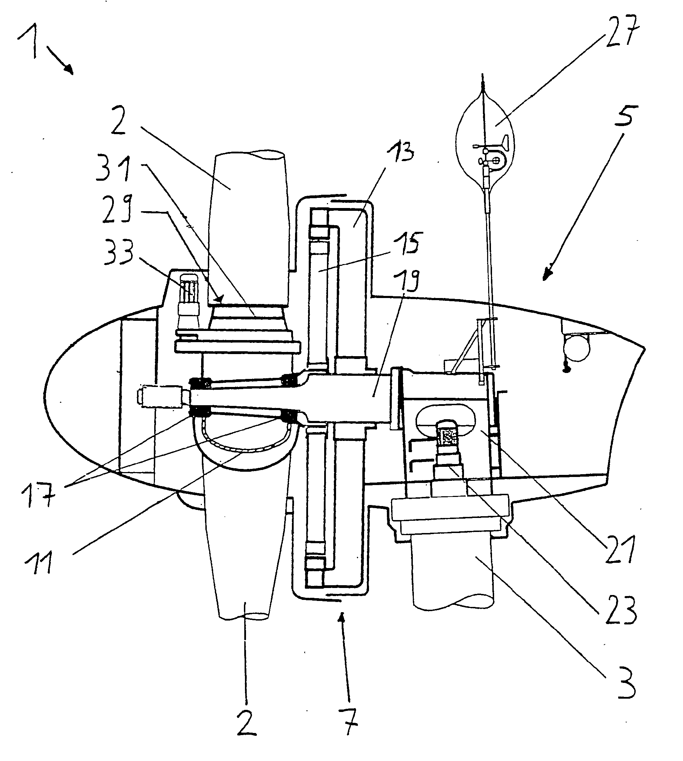

Die in Figur 1 dargestellte Windenergieanlage 1 umfasst im Wesentlichen einen Turm 3 und eine an diesem befestigte Gondel 5 zur Aufnahme eines Generators 7 sowie eines damit direkt verbundenen Rotors 9. Der Rotor 9 weist eine Rotornabe 11 sowie drei an der Rotornabe 11 befestigte Rotorblätter 2 auf. Durch die auf das Rotorblatt 2 wirkenden Windkräfte wird die Rotornabe 11 in Drehung versetzt, um den Generator 7 anzutreiben.

Der als Ringgenerator ausgebildete Generator 7 weist einen Stator 13 und einen Läufer 15 auf. Der Läufer 15 ist zusammen mit der Rotornabe 11 mittels Hauptlagern 17 auf einem Achszapfen 19 gelagert, der fest mit einem sogenannten Maschinenträger 21 verbunden ist. Der Maschinenträger 21 ist unter Vermittlung eines (nicht dargestellten) Drehlagers mittels Azimutmotoren 23 verschwenkbar auf dem Turm 3 gelagert. An dem Maschinenträger 21 ist ferner eine Einrichtung 27 mit Anemometer und Windfahne befestigt.

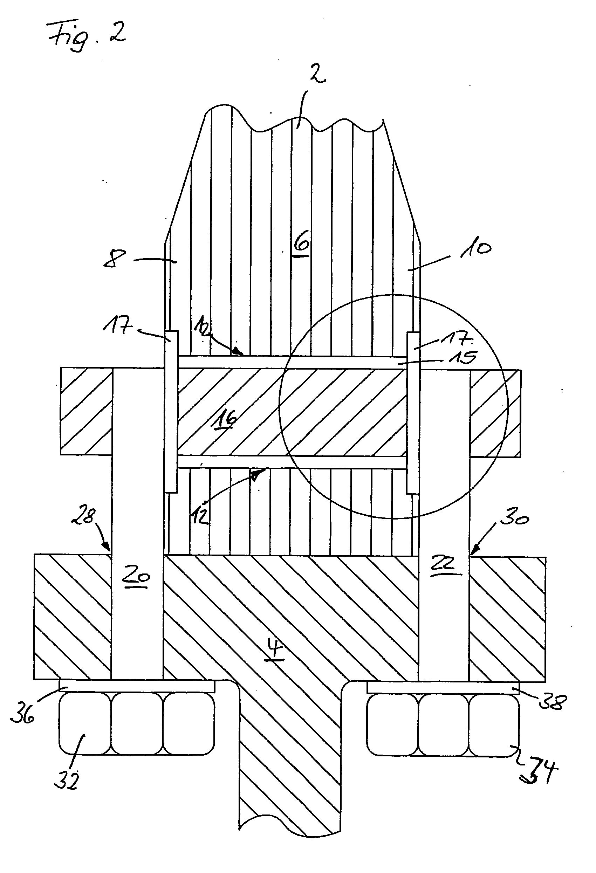

Figur 2 zeigt in einer Schnittdarstellung einen blattwurzelseitigen Abschnitt eines Rotorblattes 2 einer Windenergieanlage 1, bei der es sich beispielsweise um eine sogenannte Horizontalachsen-Windenergieanlage handeln kann, wie in Figur 1 dargestellt.

Das in Figur 2 teilweise dargestellte Rotorblatt 2 ist in Leichtbauweise aus einem glasfaserverstärkten Epoxidharz-Verbundmaterial hergestellt und mittels eines erfindungsgemäßen Rotorblattanschlusses 29 (Figur 1) mit der Rotornabe 11 fest verbunden, indem das Rotorblatt 2 mit einem im Querschnitt T-förmigen, umlaufenden Flansch 4 verschraubt ist, der seinerseits einstückig mit der Rotornabe 11 ausgebildet ist. Der in Figur 1 dargestellte Abschnitt des Rotorblattes 2 ist - ebenso wie der Flansch 4 - umlaufend und im Wesentlichen rohrförmig ausgebildet und geht mit zunehmenden Abstand von der Rotornabe 11 in das (nicht dargestellte) aerodynamisch wirksame Rotorblattprofil über. Zwischen dem Rotorblattanschluss 29 und der Rotornabe 11 kann ein Blattadapter 31 angeordnet sein. Mit Hilfe eines Blattverstellmotors kann das Rotorblatt 2 zusammen mit dem Blattanschluss 29 und dem Blattadapter 31 um die Längsachse des Rotorblattes 2 gedreht werden.

Figur 2 veranschaulicht die erfindungsgemäße, zweiseitige Erweiterung des Querschnitts des Rotorblattes 2 im Bereich der Rotorblattwurzel 6, d. h., im Ausführungsbeispiel des Endbereichs des im Wesentlichen rohrförmigen Abschnitts des Rotorblattes 2, welcher im montierten Zustand an dem Flansch 4 der Rotornabe 11 anliegt. An gegenüberliegenden seitlichen Bereichen der Rotorblattwurzel 6 sind Verdickungsabschnitte 8, 10 angeformt, die für eine Erweiterung des Querschnitts des Rotorblattes 2 in Richtung auf den Endbereich des Rotorblattes 2 im Bereich der Rotorblattwurzel 6 sorgen. Durch den erweiterten Querschnitt wird dort eine große Festigkeit erzielt. Die Verdickungsabschnitte 8, 10 können beispielsweise durch Anbringen zusätzlicher Epoxidharz- und Faser-Schichten integral an der Rotorblattwurzel 6 hergestellt werden.

Im Bereich der Rotorblattwurzel 6 sind über den Umfang der Rotorblattwurzel 6 verteilt Durchgangslöcher 12 vorgesehen. In diese Löcher 12 sind Querbolzen 16 aus Metall als Verankerungselemente innerhalb des Rotorblattes 2 eingesetzt.

Die Querbolzen 16 weisen eine über die Dicke der Rotorblattwurzel 6 hinausgehende Länge auf und in ihren Endbereichen außerhalb der Rotorblattwurzel 6 sind beidseitig der Rotorblattwurzel Durchgangslöcher vorgesehen. Diese können z. B. (nicht dargestellte) Innengewinde aufweisen. Diese wirken mit Zugelementen 20, 22 in Form zylindrischer Bolzen aus Metall zusammen. Diese Zugelemente 20, 22 können mit einem Außengewinde versehen sein, mit dem sie in das passende Innengewinde des Querbolzens 16 eingeschraubt werden.

Die Zugelemente 20, 22 erstrecken sich außerhalb des Rotorblattes 2 beidseitig der Rotorblattwurzel durch Bohrungen 28, 30 des Flansches 4. Mittels einer auf ein (weiteres) Außengewinde der Zugelemente 20, 22 aufschraubbaren Mutter 32, 34 unter Zwischenschaltung einer Hülse oder einer Unterlegscheibe 36, 38 können die Zugelemente 20, 22 mit großen Zugkräften beaufschlagt und somit das Rotorblatt 2 fest an den Flansch 4 und somit die Rotornabe 11 gezogen werden, so dass eine feste Verbindung zwischen Rotorblatt 2 und Rotornabe 11 hergestellt wird.

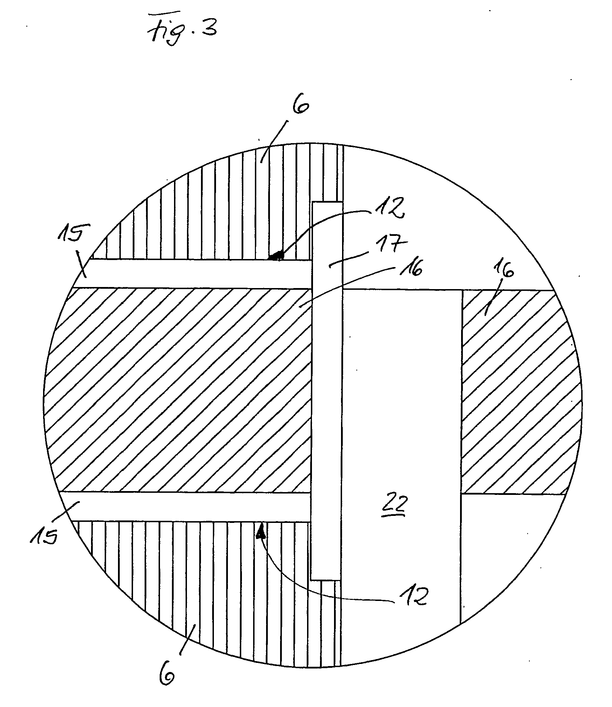

Figur 3 zeigt vergrößert einen Ausschnitt aus Figur 2. Hier ist besonders gut zu erkennen, wie die Hülse 15 in dem Loch 12, der Querbolzen 16 in der Hülse 15 und eine Scheibe 17 um den Querbolzen herum angeordnet sind.

Damit die Zugelemente 20, 22 möglichst nahe an der Oberfläche des Wurzelbereichs 6 des Rotorblattes 2 verlaufen, werden die Scheiben 17 bündig mit der Oberfläche des Wurzelbereichs 6 des Rotorblattes 2 angeordnet.

Ebenso, wie der Querbolzen 16 in das Loch 12 eingeklebt sein kann, kann die Hülse 15 in das Loch eingeklebt sein. Damit können Bewegungen zwischen dem Querbolzen 16 und der Wandung des Loches 12 vermieden werden. Diese ergeben sich statt dessen zwischen der Hülse 15 und dem Querbolzen 16. Auch wenn diese Bewegungen durch die feste Einspannung des Querbolzens 16 durch die Zugelemente 20, 22 nur äußerst geringe (sogenannte Mikrobewegungen) sein können, kann es durch die Dauerbelastung sonst gleichwohl zu Schäden kommen.

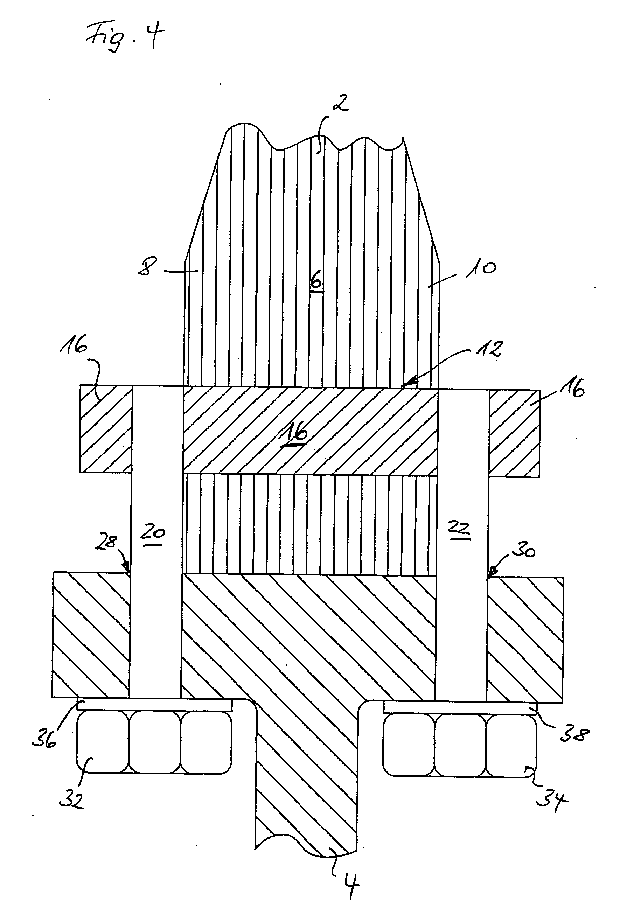

In Figur 4 ist eine alternative, einfachere Ausführungsform der Erfindung dargestellt. Bei dieser Ausführungsform verläuft der Querbolzen 16 allein innerhalb des Loches 12 ohne eine Hülse. Natürlich kann der Querbolzen 16 wiederum in das Loch 12 eingeklebt sein, um eine Bewegung zwischen beiden Komponenten und damit ein Abrieb des Materials der Rotorblattwurzel 6 zu verhindern und gleichzeitig während der Montage den Querbolzen 16 in seiner vorgegebenen Position zu halten.

Der weitere Aufbau entspricht demjenigen der bekannten Ausführungsform; die Zugelemente 20, 22 verlaufen durch den Flansch 4 und sind unter Vermittlung von Scheiben 36, 38 mit Muttern 32, 34 befestigt.

Bei der Realisierung der Rotorblätter bei Windenergieanlagen ist es besonders vorteilhaft, wenn die Windenergieanlage eine solche ist, bei welcher das Rotorblatt von einem Rotor getragen wird und mittels Pitch die Rotorblätter in ihrem Winkel zum Wind anstellbar sind. Hierbei kann es auch besonders vorteilhaft sein, wenn der Pitchantrieb nicht nur aus einem, sondern aus zwei oder drei Pitchantrieben besteht.

## Patentansprüche

1. Rotorblatt (2) für eine Windenergieanlage (1), mit mehreren im Bereich der Rotorblattwurzel angeordneten Löchern, die als Durchgangslöcher ausgebildet sind, die sich im Wesentlichen quer zur Längsachse des Rotorblattes erstrecken, mit in die Löcher eingesetzten Querbolzer (16) und mit den Querbolzen verbindbaren Zugelemente (20,22), wobei die Querbolzen ein Innengewinde und die Zugelemente ein dem Durchmesser der Innengewinde entsprechendes Außengewinde aufweisen und die Zugelemente mit den Querbolzen verschraubt sind, **dadurch gekennzeichnet dass**
die Zugelemente (20,22) außberhalb der Rotorblatt worzel (6) verlaufen.

2. Rotorblatt nach Anspruch 1,
**dadurch gekennzeichnet, dass** mehrere beabstandete Löcher (12) zur Aufnahme mehrerer Querbolzen (16) vorgesehen sind.

3. Rotorblatt nach Anspruch 1 oder 2,
**dadurch gekennzeichnet, dass** das Rotorblatt (2) im Bereich der Rotorblattwurzel (6) einen erweiterten Querschnitt aufweist und dass das Loch (12) oder die Löcher (12) im Bereich des erweiterten Querschnitts angeordnet ist/sind.

4. Rotorblatt nach Anspruch 3,
**dadurch gekennzeichnet, dass** sich der Querschnitt des Rotorblattes (2) beidseitig in Richtung auf einen nabenseitigen Endabschnitt des Rotorblattes (6) erweitert.

5. Rotorblatt nach mindestens einem der vorstehenden Ansprüche,
**dadurch gekennzeichnet, dass** das Rotorblatt (2) im Bereich der Rotorblattwurzel (6) einen im Wesentlichen rohrförmigen Endabschnitt aufweist, in welchem mehrere Löcher (12) ausgebildet sind.

6. Rotorblatt nach wenigstens einem der vorstehenden Ansprüche,
**dadurch gekennzeichnet, dass** es im Wesentlichen aus einem glaserfaserverstärkten Epoxidharz-Verbundmaterial besteht.

7. Rotorblatt nach einem der vorstehenden Ansprüche,
**dadurch gekennzeichnet, dass** die Querbolzen (16) in die Löcher (12) eingeklebt sind.

8. Rotorblatt nach einem der Ansprüche 1 bis 6,
**dadurch gekennzeichnet, dass** in dem Loch (12) eine Hülse (15) vorgesehen ist und dass der Querbolzen (16) innerhalb der Hülse (15) angeordnet ist.

9. Rotorblatt nach einem der vorstehenden Ansprüche,
**dadurch gekennzeichnet, dass** an wenigstens einem Ende des Loches (12) eine metallische Scheibe (17) konzentrisch zur Längsachse des Loches (12) vorgesehen ist.

10. Rotor für eine Windenergieanlage, mit einer Rotornabe und mindestens einem an der Rotornabe befestigten Rotorblatt,
**dadurch gekennzeichnet, dass** das wenigstens eine Rotorblatt (2) nach einem der vorstehenden Ansprüche ausgebildet ist.

11. Rotor nach Anspruch 10,
**dadurch gekennzeichnet, dass** die Rotornabe (11) einen umlaufenden, im Querschnitt im Wesentlichen T-förmigen Flansch (4) zum Anschluss des Rotorblattes (2) aufweist und das Rotorblatt (2) mittels mehrerer Zugelemente (20, 22), die mit in dem Rotorblatt (2) angeordneten Querbolzen (16) verbunden sind, mit dem Flansch (4) verschraubt sind.

12. Rotor nach Anspruch 11,
**dadurch gekennzeichnet, dass** die Zugelemente (20, 22) paarweise parallel zueinander und in zwei im Wesentlichen zueinander konzentrisch angeordneten Reihen angeordnet sind.

13. Windenergieanlage,
**gekennzeichnet durch** ein Rotorblatt (2) nach einem der vorstehenden Ansprüche und/oder **gekennzeichnet durch** einen Rotor (9) nach einem der vorstehenden Ansprüche.

## Claims

1. Rotor blade (2) for a wind power installation (1), with a plurality of holes which are disposed in the region of the rotor blade root and which are in the form of through-holes extending substantially transversely to the longitudinal axis of the rotor blade, with transverse pins (16) inserted into the holes and with tension elements (20, 22) which are connectable to the transverse pins, wherein the transverse pins have an internal thread and the tension elements have an external thread corresponding to the diameter of the internal thread, and the tension elements are screwed to the transverse pins, **characterised in that** the tension elements (20, 22) extend outside the rotor blade root (6).

2. Rotor blade according to claim 1,
**characterised in that** a plurality of spaced holes (12) are provided for receiving a plurality of transverse pins (16).

3. Rotor blade according to claim 1 or 2,
**characterised in that** the rotor blade (2) has an enlarged cross-section in the region of the rotor blade root (6) and that the hole (12) or the holes (12) is/are disposed in the region of the enlarged cross-section.

4. Rotor blade according to claim 3,
**characterised in that** the cross-section of the rotor blade (2) is enlarged on both sides in the direction towards an end portion of the rotor blade (2), which end portion is towards the hub.

5. Rotor blade according to at least one of the preceding claims,
**characterised in that** the rotor blade (2) has, in the region of the rotor blade root (6), a substantially tubular end portion in which a plurality of holes (12) are formed.

6. Rotor blade according to at least one of the preceding claims,
**characterised in that** it substantially consists of a glass fibre reinforced epoxy resin composite material.

7. Rotor blade according to any one of the preceding claims,
**characterised in that** the transverse pins (16) are adhesively bonded into the holes (12).

8. Rotor blade according to any one of claims 1 to 6,
**characterised in that** a sleeve (15) is provided in the hole (12) and that the transverse pin (16) is disposed inside the sleeve (15).

9. Rotor blade according to any one of the preceding claims,
**characterised in that** a metallic disc (17) is provided at at least one end of the hole (12), in concentric relationship with the longitudinal axis of the hole (12).

10. Rotor for a wind power installation, having a rotor hub and at least one rotor blade fastened to the rotor hub,
**characterised in that** the at least one rotor blade (2) is configured in accordance with any one of the preceding claims.

11. Rotor blade according to claim 10,
**characterised in that** the rotor hub (11) has a peripherally extending flange (4) of substantially T-shaped cross-section for connection of the rotor blade (2), and the rotor blade (2) is screwed to the flange (4) by means of a plurality of tension elements (20, 22) connected to transverse pins (16) disposed in the rotor blade (2).

12. Rotor according to claim 11,
**characterised in that** the tension elements (20, 22) are disposed in pairs parallel to each other and in two rows disposed in substantially concentric relationship with each other.

13. Wind power installation,
**characterised by** a rotor blade (2) in accordance with any one of the preceding claims and/or **characterised by** a rotor (9) in accordance with any one of the preceding claims.

## Revendications

1. Pale de rotor (2) pour installation d'énergie éolienne (1), comprenant plusieurs trous ménagés dans la zone de la base de la pale de rotor, qui se présentent sous la forme de trous traversants, qui s'étendent sensiblement transversalement à l'axe longitudinal de la pale de rotor, avec des boulons transversaux (16) introduits dans les trous et des éléments de traction (20, 22) qui peuvent être raccordés aux boulons transversaux, dans laquelle les boulons transversaux présentent un filet intérieur et les éléments de traction un filet extérieur correspondant au diamètre du filet intérieur, et les éléments de traction sont vissés sur les boulons transversaux, **caractérisée en ce que** les éléments de traction (20, 22) s'étendent à l'extérieur de la base (6) de la pale de rotor.

2. Pale de rotor selon la revendication 1,
**caractérisée en ce qu'**il est prévu plusieurs trous espacés (12) pour recevoir plusieurs boulons transversaux (16).

3. Pale de rotor selon la revendication 1 ou 2,
**caractérisée en ce que** la pale de rotor (2) présente dans la zone de la base (6) de la pale de rotor une section transversale élargie et **en ce que** le trou (12) ou les trous (12) est ou sont agencés dans la zone de la section transversale élargie.

4. Pale de rotor selon la revendication 3,
**caractérisée en ce que** la section transversale de la pale de rotor (2) s'élargit des deux côtés dans la direction d'une section d'extrémité de la pale de rotor (6) côté moyeu.

5. Pale de rotor selon au moins l'une quelconque des revendications précédentes,
**caractérisée en ce que** la pale de rotor (2) présente dans la zone de la base (6) de la pale de rotor une section d'extrémité sensiblement tubulaire, dans laquelle plusieurs orifices (12) sont formés.

6. Pale de rotor selon au moins l'une quelconque des revendications précédentes,
**caractérisée en ce qu'**elle est constituée en substance d'un matériau composite à base de résine époxyde renforcée par des fibres de verre.

7. Pale de rotor selon l'une quelconque des revendications précédentes,
**caractérisée en ce que** les boulons transversaux (16) sont collés dans les trous (12).

8. Pale de rotor selon l'une quelconque des revendications 1 à 6,
**caractérisée en ce qu'**il est prévu une douille (15) dans le trou (12) et le boulon transversal (16) est aménagé à l'intérieur de la douille (15).

9. Pale de rotor selon l'une quelconque des revendications précédentes,
**caractérisée en ce qu'**il est prévu à au moins une extrémité du trou (12) un disque métallique (17) de manière concentrique avec l'axe longitudinal du trou (12).

10. Rotor pour installation d'énergie éolienne, avec un moyeu de rotor et au moins une pale de rotor fixée au moyeu du rotor,
**caractérisé en ce que** la au moins une pale de rotor (2) est formée selon l'une quelconque des revendications précédentes.

11. Rotor selon la revendication 10,
**caractérisé en ce que** le moyeu de rotor (11) présente une bride (4) périphérique sensiblement en forme de T en coupe transversale pour se raccorder à la pale de rotor (2) et la pale de rotor (2) est vissée à la bride (4) au moyen d'éléments de traction (20, 22), qui sont reliés aux boulons transversaux (16) agencés dans la pale de rotor (2).

12. Rotor selon la revendication 11,
**caractérisé en ce que** les éléments de traction (20, 22) sont aménagés par paires parallèlement l'un à l'autre et en deux rangées agencées sensiblement concentriquement l'une à l'autre.

13. Installation d'énergie éolienne,
**caractérisée par** une pale de rotor (2) selon l'une quelconque des revendications précédentes et/ou **caractérisée par** un rotor (9) selon l'une quelconque des revendications précédentes.
